# EUROPÄISCHE PATENTSCHRIFT

(11) **EP 0 818 345 B1**
(45) Veröffentlichungstag und Bekanntmachung des Hinweises auf die Patenterteilung: **16.01.2002**
(21) Anmeldenummer: 97110113.4
(22) Anmeldetag: 20.06.1997
(51) Int. Cl.: B60N 2/06

(54) **Vordere Lagerung eines Fahrzeugsitzes**
Front bearing for automotive vehicle seats
Palier avant pour sièges de véhicules automobiles

(30) Priorität: 10.07.1996 DE 19627707
(43) Veröffentlichungstag der Anmeldung: 14.01.1998
(73) Patentinhaber: Volkswagen Aktiengesellschaft, 38436 Wolfsburg (DE)
(72) Erfinder: Schwarzer, Jürgen, 38110 Braunschweig (DE); Schweissgut, Jakob, Dipl.-Ing., 38542 Leiferde (DE)
(74) Vertreter: Schneider, Henry, Dipl.-Ing.

(56) Entgegenhaltungen:
- DE-A- 4 304 456
- US-A- 5 039 166
- US-A- 5 188 329
- US-A- 5 209 447
- US-A- 5 242 143
- US-A- 5 275 369
- US-A- 5 482 243

## Beschreibung

Die Erfindung betrifft die vordere Lagerung eines Fahrzeugsitzes gemäß dem, z.B. im Dokument US 5 275 369 A offenbarten, Oberbegriff des Patentanspruchs 1.

Bei einem bekannten Fahrzeugsitz dieser Art (vergleiche DE 43 04 456 A1), der auch als .Dreibeinsitz bekannt ist, ist die Mittelschiene im Querschnitt Z-förmig ausgebildet. Sie durchsetzt eine Aussparung in dem am karosseriefesten Sitzquerträger angeschweißten Führungsbock, an dem ein in Fahrzeugquerrichtung verschiebbarer federbelasteter Bolzen gelagert ist, der zwecks Arretierung des längsverschiebbaren Sitzes eins von mehreren hintereinander in dem senkrechten Steg der Schiene angeordneten Löchern durchsetzt. Der Abstand der Löcher in der Schiene kennzeichnet die Schrittweite bei der Längsverstellung des Sitzes.

Der Erfindung liegt die Aufgabe zugrunde, diese bekannte und vieltausendfach bewährte Lagerung weiter zu verbessern. Insbesondere soll eine Prüfung der Funktion der vorderen Führung außerhalb des Fahrzeugs möglich sein. Weiterhin soll eine bessere Montagemöglichkeit beim Einbau des Sitzes in das Fahrzeug erreicht werden, auch im Hinblick auf eine mechanisierte Montage.

Diese Aufgabe wird bei einer gattungsgemäßen Lagerung mit den kennzeichnenden Merkmalen des Patentanspruchs 1 gelöst.

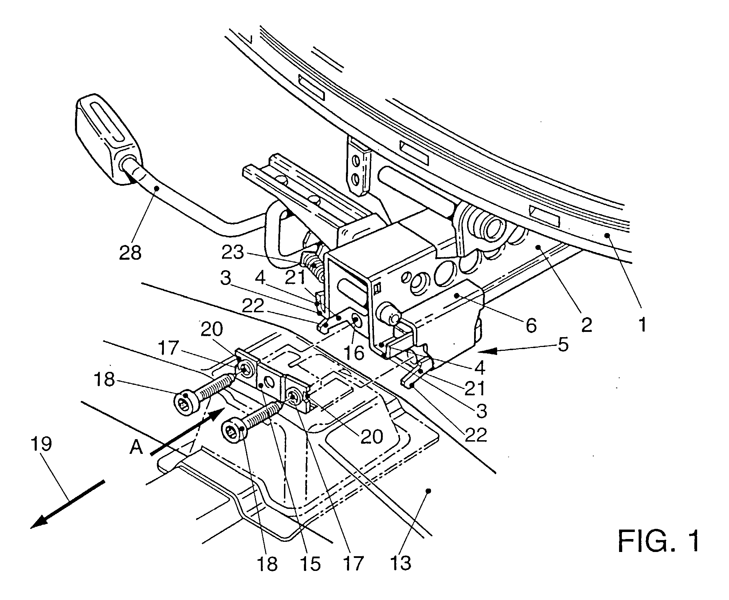

Weitere Merkmale, Vorteile und zweckmäßige Ausgestaltungen der Erfindung ergeben sich aus den Unteransprüchen sowie aus der nachstehenden Beschreibung einer bevorzugten Ausführungsform der Erfindung anhand der beigefügten Zeichnung. Darin zeigen
- Figur 1: in perspektivischer Darstellung eine noch nicht fertig montierte vordere Lagerung eines Dreibeinsitzes in einem Fahrzeug mit den erfindungswesentlichen Merkmalen und

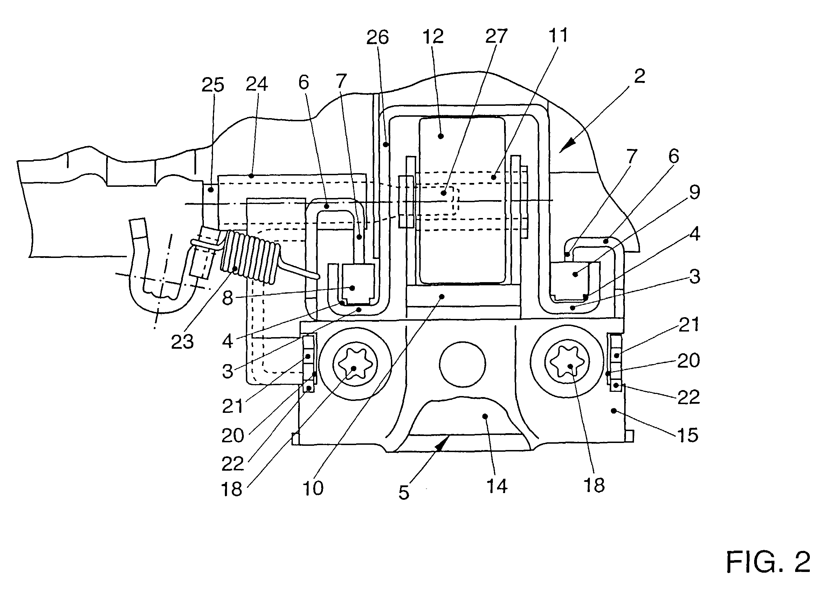

- Figur 2: eine Ansicht auf die Lagerstelle in Richtung des Pfeils A in Figur 1, wobei in diesem Falle die Lagerung fertig montiert (verschraubt) ist.

An einem Rahmen 1 eines in Längsrichtung verschiebbaren Sitzes ist eine Mittelschiene 2 befestigt, die im Querschnitt quasi hutförmig ausgebildet ist. Genauer gesagt, zeigt der Querschnitt ein mit der Öffnung nach unten weisendes U, dessen freie Schenkelenden nach außen abstehende Flansche 3 aufweisen, die zu nach oben offenen Führungskanälen 4 ausgeformt sind.

Der Mittelschiene 2 zugeordnet ist ein insgesamt mit 5 bezeichneter Führungsbock, der ebenfalls einen im wesentlichen U-förmigen Querschnitt mit an seinen freien Schenkelenden nach innen gerichteten Fortsätzen 6 aufweist, die ihrerseits mit abwärts gerichteten, stegartigen Abschnitten 7 versehen sind. Auf die Enden dieser Abschnitte 7 sind Kunststoffgleiter 8, 9 aufgesteckt, die in die Führungskanäle 4 eintauchen. Der Kunststoffgleiter 8 dient dabei quasi als Niederhalter für die Mittelschiene 2, d. h., er liegt mit seiner Unterseite auf dem Kanalboden auf, während er seitlich reichlich Spiel hat. Dagegen übernimmt der Gleiter 9 die seitliche Führung der Mittelschiene 2, d. h., er liegt elastisch an den Seitenwänden des Führungskanals an, während zwischen seiner Unterseite und dem Kanalboden genügend Luft ist.

In den Führungsbock 5 integriert ist ein Lagerbock 10 mit einer quer zur Verschieberichtung des Sitzes verlaufenden Lagerhülse 11 zur Aufnahme einer Rolle 12 als Stützelement für die Mittelschiene 2. Die Rolle 12 erleichtert die Längsverschiebbarkeit des Sitzes erheblich.

Der Führungsbock 5 weist ferner zu seiner Befestigung an einem karosseriefesten Querträger 13 eine Stirnfläche 14 auf, der eine mit dem Querträger 13 verschweißte Befestigungsplatte 15 zugeordnet ist. In der Stirnfläche 14 und der Befestigungsplatte 15 sind Gewindelöcher 16 bzw. Durchgangslöcher 17 für Schrauben 18 vorgesehen, mittels deren eine lösbare Verbindung zwischen dem Querträger 13 und dem Führungsbock 5 herstellbar ist.

Der Führungsbock 5 ist sozusagen Bestandteil des Sitzes (und nicht, wie bei der bekannten Lagerung, Bestandteil der Karosserie); das Zusammenspiel von Führungsbock 5 und Mittelschiene 2 kann bereits vor dem Einbau des Sitzes in das Fahrzeug überprüft und erforderlichenfalls korrigiert werden. Der Einbau des Sitzes erfolgt in der Weise, daß dieser mit an der Mittelschiene 2 vormontiertem Führungsbock 5 in Fahrtrichtung (diese ist durch den Pfeil 19 gekennzeichnet) gegen den Querträger 13 bewegt wird, bis die Stirnfläche 14 des Führungsbockes 5 auf die Befestigungsplatte 15 trifft. Wenn die Gewindelöcher 16 und die Durchgangslöcher 17 einander fluchten, werden die Schrauben 18 angesetzt und festgezogen.

Zur Erleichterung der Sitzmontage weist die Befestigungsplatte 15 seitlich zwei Aussparungen 20 auf, denen von der Stirnfläche 14 nach vorn abstehende Führungselemente 21 zugeordnet sind. Diese sind als im wesentlichen vertikal ausgerichtete Blechzungen ausgebildet, die im Ausführungsbeispiel hakenförmige Abschnitte 22 als Halteelemente aufweisen. Bei der Montage des Sitzes werden die Blechzungen 21 in die Aussparungen 20 eingefädelt, und die hakenförmigen Abschnitte 22 hintergreifen jeweils einen die Aussparungen 20 begrenzenden Wandabschnitt der Befestigungsplatte 15. Damit ist zum einen eine Vorpositionierung des Sitzes gegeben, in der die Befestigungslöcher 16, 17 fluchten, andererseits wird der Sitz in dieser Lage provisorisch gehalten, so daß der Führungsbock 5 an der Befestigungsplatte 15 festgeschraubt werden kann. Das Einfädeln der Blechzungen 21 in die Aussparungen 20 wird noch erleichtert, wenn die Blechzungen 21 nicht parallel zueinander verlaufen, sondern in Einbaurichtung etwas gespreizt sind.

Alternativ können die Blechzungen 21 - statt die hakenförmigen Abschnitte 22 aufzuweisen - auch keilförmig ausgebildet sein. Damit erreicht man im Hinblick auf die in einer Flucht liegenden Befestigungslöcher 16, 17 eine bessere Zentrierung beim Zusammenbau von Führungsbock 5 und Befestigungsplatte 15. Um auch in diesem Falle vor der Verschraubung eine Aufhebung der Positionierung des Führungsbockes 5 durch ein Zurückrutschen des Sitzes zu vermeiden, ist es zweckmäßig, als Halteelement einen doppelt wirksamen Rastclip (zeichnerisch nicht dargestellt) zu benutzen, der mit einem seiner Endbereiche in einer Öffnung in der Stirnfläche 14 vormontiert ist. Sein anderer Endbereich rastet, während der Führungsbock 5 bei der Sitzmontage gegen die Befestigungsplatte 15 geführt wird, in eine Gegenöffnung in der Befestigungsplatte 15 ein. Der Rastclip ist vorteilhafterweise im Bereich seiner Quermittelebene mit einer Anschlagplatte versehen, die zum einen ein Durchrutschen des Rastclips durch die Öffnung oder Gegenöffnung verhindert und zum andern bei einer geeigneten Werkstoffwahl für den Rastclip, beispielsweise Gummi oder ein elastischer Kunststoff, dafür sorgt, daß die metallische Stirnfläche 14 nicht direkt auf der metallischen Befestigungsplatte 15 aufliegt, womit unerwünschte Geräusche in diesem Bereich vermieden werden. Im Bedarfsfall kann der Rastclip dank einer sich über beinahe seine ganze Länge erstreckenden Aussparung zusammengedrückt und aus seinen Verrastungen gelöst werden.

Zur Verriegelung des längsverschiebbaren Sitzes in einer vorbestimmten Position ist ein federbelasteter (Feder 23), in einer an dem Führungsbock 5 starr befestigten Hülse 24 quer zur Verschieberichtung des Sitzes verschiebbar gelagerter Bolzen 25 vorgesehen, der eine von mehreren in dem Schenkel 26 der Mittelschiene 2 hintereinander angeordneten Öffnungen durchsetzt und damit eine formschlüssige Verbindung zwischen Führungsbock 5 und Mittelschiene 2 herstellt. Das freie Ende 27 des Bolzens 25 taucht dabei in die Lagerhülse 11 ein. Diese Lösung gestattet eine kompakte Bauweise.

Die Entriegelung erfolgt durch Betätigen eines Entriegelungshebels 28.

## Patentansprüche

1. Vordere Lagerung eines sich in einer vorderen und zwei hinteren Lagerstellen auf dem Fahrzeugboden (13) abstützenden Fahrzeugsitzes (1) mit
einer der Längsverstellung des Sitzes (1) dienenden, am Sitz befestigten Mittelschiene (2),
einem als Führungselement für die Mittelschiene (2) dienenden, an einem bodenfesten Querträger (13) lösbar befestigbaren Führungsbock (5) und
einer aufhebbaren Arretierung (25) zwischen Mittelschiene (2) und Führungsbock (5),
**dadurch gekennzeichnet,**
- **daß** die Mittelschiene (2) als umgekehrtes U-Profil mit an den freien Schenkelenden nach außen abstehenden Flanschen (3) ausgebildet ist,
- **daß** der Führungsbock (5) einen im wesentlichen U-förmigen Querschnitt mit an seinen freien Schenkelenden nach innen gerichteten Fortsätzen (6) aufweist, die die Flansche (3) der Mittelschiene (2) übergreifen,
- **daß** der Führungsbock (5) einen Lagerbock (10) mit einer darin gelagerten, um eine quer zur Mittelschiene (2) verlaufenden Achse drehbaren Rolle (12) enthält, auf der sich die Mittelschiene (2) mit ihrer Basisfläche abstützt,
- und **daß** der Führungsbock (5) eine Stirnfläche (14) zur lösbaren Befestigung desselben am Querträger (13) aufweist.

2. Lagerung nach Anspruch 1, **dadurch gekennzeichnet, daß** die Flansche (3) an ihren Enden nach oben gerichtete Stege aufweisen, die jeweils einen U-förmigen Führungskanal (4) nach außen begrenzen, und daß die Fortsätze (6) des Führungsbockes (5) abwärts gerichtete, in die Führungskanäle (4) eintauchende Abschnitte (7) aufweisen.

3. Lagerung nach Anspruch 2, **dadurch gekennzeichnet, daß** die freien Enden der Abschnitte (7) mit Gleitschuhen (8, 9) versehen sind, von denen einer (8) sich auf dem Grund des zugehörigen Führungskanals (4) abstützt, während der andere (9) als Führung in Querrichtung dient.

4. Lagerung nach einem der Ansprüche 1 bis 3, **dadurch gekennzeichnet, daß** der Stirnfläche (14) eine mit dem Querträger (13) verbundene Befestigungsplatte (15) zugeordnet ist, mit der der Führungsbock (5) mittels einer Schraubanordnung (18) verbindbar ist.

5. Lagerung nach Anspruch 4, **dadurch gekennzeichnet, daß** die Befestigungsplatte (15) wenigstens eine Ausnehmung (20) aufweist, der ein von der Stirnfläche (14) des Führungsbockes (5) in Einbaurichtung (19) des Sitzes (1) abstehendes Führungselement (21) als Montagehilfe zugeordnet ist.

6. Lagerung nach Anspruch 5, **dadurch gekennzeichnet, daß** das weitere Führungselement (21) in Einbaurichtung (19) sich verjüngend ausgebildet ist.

7. Lagerung nach Anspruch 5 oder 6 mit zwei Ausnehmungen (20) in der Befestigungsplatte (15) und zwei Führungselementen (21), **dadurch gekennzeichnet, daß** die als wenigstens annähernd vertikal stehende Blechzungen ausgebildeten weiteren Führungselemente (21) in Einbaurichtung (19) auseinanderdriftend angeordnet sind.

8. Lagerung nach einem der Ansprüche 1 bis 7, **dadurch gekennzeichnet, daß** als Montagehilfe an der Stirnfläche (14) des Führungsbockes (5) ein oder zwei Halteelement/e (22) befestigt ist/sind, mit dem/denen beim Einbau des Sitzes (1) vor der endgültigen Befestigung des Führungsbockes (5) am Querträger (13) der Führungsbock (5) lose am Querträger (13) gehalten wird.

9. Lagerung nach Anspruch 8 und 7, **dadurch gekennzeichnet, daß** die Halteelemente von an den als Blechzungen (21) ausgebildeten Führungselementen jeweils angeformten hakenförmigen Abschnitten (22) gebildet sind, die hinter die Befestigungsplatte (15) greifen.

10. Lagerung nach Anspruch 8, **dadurch gekennzeichnet, daß** mindestens ein Halteelement von einem in der Stirnfläche (14) des Führungsbockes (5) gehaltenen Rastclip gebildet ist.

11. Lagerung nach Anspruch 10, **dadurch gekennzeichnet, daß** jeder Rastclip sowohl in der Stirnfläche (14) als auch in der Befestigungsplatte (15) einrastbar ist.

12. Lagerung nach Anspruch 11, **dadurch gekennzeichnet, daß** jeder Rastclip im wesentlichen symmetrisch zu seiner Quermittelebene ausgebildet ist.

13. Lagerung nach Anspruch 12, **dadurch gekennzeichnet, daß** im Bereich der Quermittelebene eine beidseitig wirksame Anschlagplatte an jeden Rastclip angeformt ist.

14. Lagerung nach einem der Ansprüche 10 bis 13, **dadurch gekennzeichnet, daß** jeder Rastclip eine sich im wesentlichen über seine ganze Länge erstreckende Aussparung aufweist, die eine elastische Verformung des Rastclips und eine damit verbundene Aufhebung seines Festsitzes in der Stirnfläche und/oder der Befestigungsplatte gestattet.

15. Lagerung nach einem der Ansprüche 1 bis 14, **dadurch gekennzeichnet, daß** die Arretierung zwischen Mittelschiene (2) und Führungsbock (5) über einen federbelasteten (Feder 23), in einer starr mit dem Führungsbock (5) verbundenen Hülse (24) verschiebbar gelagerten Bolzen (25) erfolgt, der mit seinem freien Ende (27) in eine konzentrisch zur Achse der Rolle (12) befindliche weitere Hülse (11) eintaucht.

## Claims

1. A front mounting of a vehicle seat (1) supported in one front mounting point and two rear mounting points on the vehicle floor (13) and having
a middle rail (2) used for the longitudinal displacement of the seat (1) and secured to the seat,
a guide base (5) used as a guide member for the middle rail (2) and securable in a releasable manner to a transverse support (13) fixed to the floor, and
a disengageable locking (25) between the middle rail (2) and the guide base (5),
**characterized in that**
- the middle rail (2) is constructed in the form of a reverse U-section with flanges (3) projecting outwards at the free ends of the arms,
- the guide base (5) has a substantially U-shaped cross-section with extensions (6) which are directed inwards at the free ends of its arms and which engage over the flanges (3) of the middle rail (2),
- the guide base (5) contains a bearing base (10) with a roller (12) which is mounted therein and is rotatable about an axis extending transversely to the middle rail (2) and on which the middle rail (2) is supported by its base face,
- and the guide base (5) has a front face (14) for the releasable fastening thereof on the transverse support (13).

2. A mounting according to Claim 1, **characterized in that** the ends of the flanges (3) have webs which are directed upwards and which each bound a U-shaped guide duct (4) towards the outside, and the extensions (6) of the guide base (5) have portions (7) which are directed downwards and which enter the guide ducts (4).

3. A mounting according to Claim 2, **characterized in that** the free ends of the portions (7) are provided with guide shoes (8, 9), of which one (8) is supported on the base of the associated guide duct (4), whereas the other (9) acts as a guide in the transverse direction.

4. A mounting according to one of Claims 1 to 3, **characterized in that** the front face (14) has associated therewith a fastening plate (15) which is connected to the transverse support (13) and to which the guide base (5) can be connected by means of a bolt arrangement (18).

5. A mounting according to Claim 4, **characterized in that** the fastening plate (15) has at least one recess (20) with which a guide member (21) projecting from the front face (14) of the guide base (5) in the insertion direction (19) of the seat (1) is associated as an aid to assembly.

6. A mounting according to Claim 5, **characterized in that** the further guide member (21) is made tapering inwards in the direction of insertion (19).

7. A mounting according to Claim 5 or 6 with two indentations (20) in the fastening plate (15) and two guide members (21), **characterized in that** the further guide members (21) constructed in the form of sheet-metal tongues directed at least substantially vertically are arranged spreading apart in the direction of insertion (19).

8. A mounting according to one of Claims 1 to 7, **characterized in that** one or two retaining members (22), by which the guide base (5) is held loosely on the transverse support (13) during the insertion of the seat (1) before the final fastening of the guide base (5) to the transverse support (13), is or are fastened to the front face (14) of the guide base (5) as an aid to assembly.

9. A mounting according to Claims 8 and 7, **characterized in that** the retaining members are formed by hook-shaped portions (22) which are formed integrally in each case on the guide members constructed in the form of sheet-metal tongues (21) and which engage behind the fastening plate (15).

10. A mounting according to Claim 8, **characterized in that** at least one retaining member is formed by a catch clip held in the front face (14) of the guide base (5)

11. A mounting according to Claim 10, **characterized in that** each catch clip can engage both in the front.face (14) and in the fastening plate (15).

12. A mounting according to Claim 11, **characterized in that** each catch clip is made substantially symmetrical to the transverse median plane thereof.

13. A mounting according to Claim 12, **characterized in that** a stop plate effective on both sides is formed integrally on the catch clip in the region of the transverse median plane.

14. A mounting according to one of Claims 10 to 13, **characterized in that** each catch clip has a recess which extends substantially over its entire length and which permits a resilient deformation of the catch clip and an associated discontinuation of its fixed seating in the front face and/or the fastening plate.

15. A mounting according to one of Claims 1 to 14, **characterized in that** the locking between the middle rail (2) and the guide base (5) takes place by way of a spring-loaded (spring 23) pin (25) which is mounted displaceably in a sleeve (24) rigidly connected to the guide base (5) and which with its free end (27) enters a further sleeve (11) arranged concentrically with the axis of the roller (12).

## Revendications

1. Fixation avant d'un siège de voiture automobile (1) reposant sur le plancher de la voiture (13) par l'intermédiaire d'un point de fixation avant et de deux points de fixation arrière avec
un rail central (2) fixé au siège de la voiture et servant au déplacement longitudinal du siège (1),
un support de guidage (5) servant d'élément de guidage pour le rail central (2) et pouvant être fixé de manière amovible sur une traverse solidaire du plancher (13) et
un dispositif d'arrêt (25) pouvant être neutralisé, qui est situé entre le rail central (2) et le support de guidage (5), **caractérisée**
- **en ce que** le rail central (2) est réalisé comme profilé en U renversé comprenant aux extrémités libres des branches des brides (3) dépassant vers l'extérieur,
- **en ce que** le support de guidage (5) a une section sensiblement en forme de U comprenant à ses extrémités libres des branches des prolongements (6) dirigés vers l'intérieur et qui recouvrent les brides (3) du rail central (2),
- **en ce que** le support de guidage (5) comprend un support d'appui (10) incluant une roulette (12), qui est mobile autour d'un axe perpendiculaire au rail central (2) et sur laquelle s'appuie la surface de base du rail central (2)
- et **en ce que** le support de guidage (5) comprend une surface frontale (14) pour sa fixation amovible sur la traverse (13).

2. Fixation selon la revendication 1, **caractérisée en ce qu'**à leurs extrémités les brides (3) comprennent des nervures dirigées vers le haut, qui délimitent respectivement vers l'extérieur un canal de guidage en forme de U (4) et **en ce que** les prolongements (6) du support de guidage (5) comprennent des sections (7) dirigées vers le bas et pénétrant dans les canaux de guidage (4).

3. Fixation selon la revendication 2, **caractérisée en ce que** les extrémités libres des sections (7) sont munies de patins de glissement (8, 9) dont l'un (8) s'appuie sur le fond du canal de guidage correspondant (4) tandis que l'autre (9) sert de guidage en direction transversale.

4. Fixation selon l'une des revendications 1 à 3, **caractérisée en ce qu'**à la surface frontale (14) est attribuée une plaque de fixation (15), qui est reliée à la traverse (13), et qui permet de réaliser une liaison du support de guidage (5) au moyen d'un ensemble de vis (18).

5. Fixation selon la revendication 4, **caractérisée en ce que** la plaque de fixation (15) comprend au moins un évidement (20), auquel est attribué comme aide au montage un élément de guidage (21) qui, en direction de montage (19) du siège (1), dépasse de la surface frontale (14) du support de guidage (5).

6. Fixation selon la revendication 5, **caractérisée en ce que** l'autre élément de guidage (21) est réalisé avec un rétrécissement en direction de montage (19).

7. Fixation selon la revendication 5 ou 6 avec deux évidements (20) dans la plaque de fixation (15) et deux éléments de guidage (21), **caractérisée en ce que** les autres éléments de guidage (21) réalisés comme languettes de tôle, disposées au moins approximativement en position verticale, s'écartent entre elles en direction de montage (19).

8. Fixation selon l'une des revendications 1 à 7, **caractérisée en ce qu'**en tant qu'aide au montage, un ou deux élément(s) de maintien (22) est(sont) fixé(s) sur la surface frontale (14) du support de guidage (5), avec lequel(lesquels) le support de guidage (5) est maintenu librement sur la traverse (13) lors du montage du siège (1), avant la fixation définitive du support de guidage (5) sur la traverse (13).

9. Fixation selon les revendications 8 et 7, **caractérisée en ce que** les éléments de maintien sont composés de sections en forme de crochets (22), qui pénètrent derrière la plaque de fixation (15) et qui sont respectivement formées sur les éléments de guidage réalisés en tant que languettes de tôle (21)

10. Fixation selon la revendication 8, **caractérisée en ce qu'**au moins un élément de maintien est formé par une griffe d'arrêt maintenue dans la surface frontale (14) du support de guidage (5).

11. Fixation selon la revendication 10, **caractérisée en ce que** chaque griffe d'arrêt peut s'emboîter aussi bien dans la surface frontale (14) que dans la plaque de fixation (15).

12. Fixation selon la revendication 11, **caractérisée en ce que** chaque griffe d'arrêt est réalisée de manière sensiblement symétrique à son plan médian transversal.

13. Fixation selon la revendication 12, **caractérisée en ce que** dans la zone du plan médian transversal une plaque d'arrêt agissant des deux côtés est formée sur chaque griffe d'arrêt.

14. Fixation selon l'une des revendications 10 à 13, **caractérisée en ce que** chaque griffe d'arrêt comprend un évidement, qui s'étend sensiblement sur l'ensemble de sa longueur et qui permet une déformation élastique de la griffe d'arrêt ainsi qu'une neutralisation conséquente de sa position d'immobilisation sur la surface frontale et/ou sur la plaque de fixation.

15. Fixation selon l'une des revendications 1 à 14, **caractérisée en ce que** le blocage entre le rail central (2) et le support de guidage (5) a lieu à l'aide d'un goujon (25), qui est soumis à l'action d'un ressort (23), qui est placé de manière mobile dans une douille (24) reliée de façon rigide au support de guidage (5) et dont l'extrémité libre (27) pénètre dans une autre douille (11) se trouvant dans une position concentrique par rapport à l'axe de la roulette (12).
